# FASCICULE DE BREVET EUROPEEN

(11) **EP 3 756 915 B1**
(45) Date de publication et mention de la délivrance du brevet: **20.11.2024**
(21) Numéro de dépôt: 20179054.0
(22) Date de dépôt: 09.06.2020
(51) Int. Cl.: B60L 1/00

(54) **SEMI-REMORQUE OU REMORQUE FRIGORIFIQUE DE TRANSPORT DE MARCHANDISES MUNIE D'UN MODULE DE PRODUCTION D'ÉLECTRICITÉ À PILE À COMBUSTIBLE**
SATTELAUFLIEGER ODER ANHÄNGER MIT KÜHLAGGREGAT FÜR WARENTRANSPORT, DER MIT EINEM STROMERZEUGUNGSMODUL MIT BRENNSTOFFZELLE AUSGESTATTET IST
REFRIGERATED SEMI-TRAILER OR TRAILER FOR TRANSPORTING GOODS PROVIDED WITH AN ELECTRICITY PRODUCING MODULE WITH FUEL CELL

(30) Priorité: 28.06.2019 FR 1907095
(43) Date de publication de la demande: 30.12.2020
(73) Titulaire: JEAN CHEREAU SAS, 50220 Ducey-les-Chéris (FR)
(72) Inventeur: GARNIER, Arnaud, 53190 Landivy (FR); COURTEILLE, Benoît, 50300 Avranches (FR)
(74) Mandataire: Casalonga

(56) Documents cités:
- EP-A1- 3 241 724
- EP-A2- 1 057 668
- EP-A2- 1 279 907
- WO-A1-2009/099429
- WO-A1-2018/226389
- WO-A1-2018/226906
- WO-A1-2019/051219
- FR-A1- 3 030 387
- US-A1- 2004 197 611
- US-A1- 2019 193 622
- US-A1- 2019 193 622

## Description

La présente invention concerne le domaine des semi-remorques et des remorques frigorifiques de transport de marchandises.

Une semi-remorque ou remorque frigorifique de transport de marchandises comprend un châssis, et une carrosserie frigorifique montée sur le châssis et délimitant un espace de chargement intérieur.

L'espace de chargement intérieur de la carrosserie frigorifique est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut comprendre une porte à un ou plusieurs battants ou encore un rideau coulissant.

Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement.

Ce type de véhicule routier frigorifique remorqué a notamment pour inconvénient d'être polluant et de générer du bruit, ce qui est problématique lors de livraisons nocturnes, notamment en centre-ville.

On connait par la demande de brevet US2019/193622A1 (Moon et al.) un véhicule routier de transport de marchandises dans lequel de l'énergie électrique est utilisée pour le refroidissement de l'espace de chargement de la carrosserie frigorifique.

Pour assurer la production et le stockage de l'énergie électrique, ce véhicule est équipé d'un réservoir cryogénique pour le stockage d'azote sous forme liquide et des batteries. Il est encore prévu un groupe frigorique électrique pour assurer le refroidissement de l'air à l'intérieur de l'espace de chargement qui est alimenté par les batteries.

Concernant la production d'électricité permettant d'alimenter le groupe frigorique électrique, il est envisagé l'utilisation d'une pile à combustible

Compte tenu de la conception du véhicule, la pile à combustible et les batteries nécessitent cependant d'être rechargées fréquemment à des stations de recharge.

Par ailleurs, le montage sur le véhicule des différents moyens prévus pour la production et le stockage de l'énergie électrique nécessite un nombre important d'opérations,

Une autre remorque similaire est divulgué dans la demande de brevet WO2018/226906A1 (Carrier Corp.), comprenant une pile à combustion pour alimenter une unité de refroidissement de la remorque.

La présente invention vise à remédier à ces inconvénients.

Plus particulièrement, la présente invention vise à prévoir une semi-remorque ou remorque frigorifique à alimentation électrique qui soit facile à monter et ayant une autonomie améliorée tout en présentant une bonne sûreté de fonctionnement.

L'invention a pour objet une semi-remorque ou remorque frigorifique de transport de marchandises comprenant une carrosserie frigorifique pourvue d'un espace de chargement intérieur et d'une machine frigorifique pour contrôler la température à l'intérieur dudit espace de chargement, et un châssis comprenant au moins deux longerons s'étendant longitudinalement et sur lequel est montée la carrosserie frigorifique.

Selon une caractéristique générale, la semi-remorque ou remorque comprend en outre un module de production d'électricité pour alimenter en énergie électrique la machine frigorifique à alimentation électrique.

Le module de production d'électricité comprend une pile à combustible, au moins un réservoir de stockage d'hydrogène pour l'alimentation en hydrogène de ladite pile à combustible, et au moins une batterie pour le stockage de l'énergie électrique produite par ladite pile à combustible et pour l'alimentation de la machine frigorifique.

Ledit réservoir de stockage du module de production d'électricité est monté entre les longerons du châssis en considérant un plan transversal audit châssis.

Les sens « longitudinal » et « transversal » sont utilisés en considérant le sens de la longueur de la semi-remorque ou de la remorque.

Selon une autre caractéristique générale, la semi-remorque ou remorque comprend également un coffre sur lequel est fixé le module de production d'électricité, le coffre étant lui-même fixé au châssis.

Ainsi, l'impact environnemental de la semi-remorque ou remorque frigorifique est fortement réduit en ce qui concerne les émissions de bruit et de particules polluantes, notamment lors des livraisons.

Par ailleurs, le coffre et le module de production d'électricité fixé sur celui-ci forment un ensemble préassemblé pouvant être monté facilement et rapidement sur le châssis de la semi-remorque ou de la remorque. Ceci permet de pouvoir monter cet ensemble sur une semi-remorque ou remorque en cours de fabrication mais aussi sur une semi-remorque ou remorque déjà assemblée. Le coffre est fixé et suspendu sous le châssis.

Avec l'agencement dudit réservoir de stockage, celui-ci est protégé par les longerons du châssis, notamment en cas de chocs de la semi-remorque ou de la remorque lors du roulage.

Ainsi, avec ledit réservoir de stockage embarqué, le module de production d'électricité présente une autonomie améliorée tout en ayant une bonne sûreté de fonctionnement.

La machine frigorifique peut comprendre un ou plusieurs moteurs électriques associés à un compresseur pour la génération de froid. Alternativement, il est possible de prévoir une machine frigorifique à alimentation électrique dépourvu de moteur électrique, comprenant par exemple un système thermochimique par absorption ou encore à magnétocalorie pour la production de froid.

Selon un agencement particulier ledit réservoir de stockage est situé également au moins en partie entre les longerons du châssis en considérant le sens vertical. Autrement dit, au moins une partie dudit réservoir de stockage est disposée verticalement entre les longerons.

Ceci accroît encore la protection dudit réservoir de stockage par les longerons du châssis.

En variante, il reste possible de prévoir que ledit réservoir de stockage est situé entièrement sous les longerons du châssis en considérant le sens vertical.

Ledit réservoir de stockage du module de production d'électricité peut s'étendre longitudinalement le long des longerons du châssis.

Dans un mode de réalisation préféré, le coffre est fixé sur les longerons du châssis. Le coffre peut être équipé de pattes de fixation fixées sur le châssis pour suspendre le coffre audit châssis.

Dans un mode de réalisation, le coffre délimite un logement central à l'intérieur duquel est disposé ledit réservoir de stockage. Le logement peut être ouvert en direction du plancher de la carrosserie frigorifique.

Le coffre peut délimiter en outre deux compartiments latéraux respectivement pour le montage de ladite pile à combustible et de ladite batterie qui sont disposés transversalement de part et d'autre du logement central. Les compartiments peuvent être ouverts transversalement vers l'extérieur.

Dans un mode de réalisation avantageux, la semi-remorque ou remorque frigorifique comprend deux carénages latéraux comprenant chacun au moins un panneau de fermeture mobile à rotation entre une position abaissée d'utilisation et une position relevée, chacun desdits panneaux permettant de fermer le compartiment associé du coffre dans la position abaissée d'utilisation.

Cela simplifie la conception du coffre et réduit le poids global de la semi-remorque ou remorque dans la mesure où ledit panneau de chaque carénage latéral remplit une double fonction.

Ledit réservoir de stockage du module de production d'électricité peut s'étendre longitudinalement en saillie de part et d'autre du logement du coffre.

Ainsi, les opérations de raccordement dudit réservoir de stockage à la pile à combustible et/ou les opérations de remplissage dudit réservoir de stockage sont simplifiées.

Selon une conception avantageuse, ledit réservoir de stockage du module de production d'électricité peut comprendre au moins un évent d'évacuation disposé à l'arrière dudit réservoir de stockage.

En cas de problème, l'hydrogène peut être évacué vers l'arrière de la semi-remorque ou de la remorque, et donc à l'opposé du tracteur équipé du groupe motopropulseur qui la tracte.

Dans un mode de réalisation particulier, le coffre est fixé au châssis longitudinalement entre des roues et des béquilles de support dudit châssis.

La semi-remorque ou remorque peut également comprendre au moins un panneau d'accès mobile à rotation autour d'un axe d'articulation dans la zone des béquilles de support et permettant l'accès à un orifice de remplissage dudit réservoir de stockage du module de production d'électricité. Ce panneau mobile à rotation forme ainsi une trappe pour l'accès au remplissage dudit réservoir. Le panneau peut être mobile à rotation autour d'un axe d'articulation vertical ou horizontal.

Ce panneau mobile peut être une partie d'un des carénages latéraux de la semi-remorque ou de la remorque. En variante, il est possible de prévoir une semi-remorque ou remorque dépourvue de carénage latéral mais comprenant uniquement ce panneau.

La présente invention sera mieux comprise à la lecture de la description détaillée d'un mode de réalisation pris à titre d'exemple nullement limitatif et illustré par les dessins annexés sur lesquels :
[Fig 1] est une vue en perspective d'une semi-remorque de transport de marchandises selon un exemple de réalisation de l'invention,
[Fig 2] est une vue en perspective d'un châssis de la semi-remorque de la figure 1,
[Fig 3] est une vue de détail de la figure 2,
[Fig 4] est une vue en perspective d'un coffre de la semi-remorque de la figure 1,
[Fig 5] est une vue en perspective éclatée du coffre de la figure 4, et
[Fig 6] est une vue en coupe selon le plan de coupe VI-VI de la figure 3.

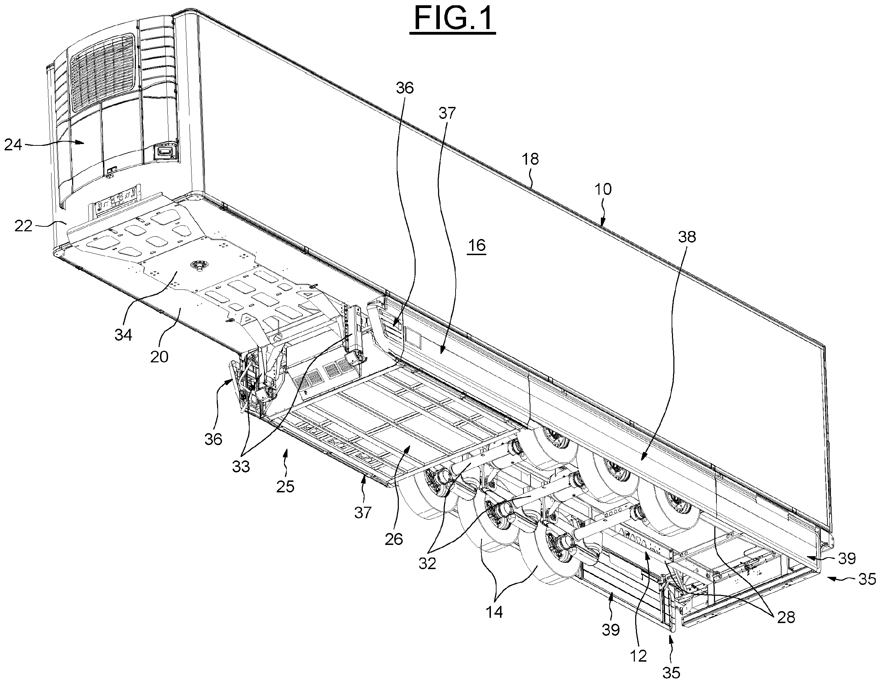

Sur la figure 1, on a représenté une semi-remorque comprenant une carrosserie 10 frigorifique et un châssis 12 porteur s'étendant longitudinalement et équipé de roues 14. La carrosserie 10 est montée sur le châssis 12.

La carrosserie 10 comprend deux flancs 16 verticaux opposés s'étendant longitudinalement (un seul étant visible sur la figure), un plafond ou pavillon 18, un plancher 20, une face avant 22 et un cadre arrière nommé custode (non visible) qui sont assemblés entre eux pour délimiter un espace de chargement intérieur.

De manière connue en soi, la carrosserie 10 comprend également un dispositif de fermeture (non visible) d'une ouverture ou accès arrière à l'espace de chargement intérieur. Le dispositif peut être une porte à un ou deux battants articulés à rotation ou encore un rideau coulissant.

La carrosserie 10 comprend encore un groupe ou machine frigorifique 24 pour envoyer de l'air à température régulée à l'intérieur de l'espace de chargement. L'air est extrait de l'espace de chargement par la machine frigorifique 24 et, après mise à température, réinjecté dans cet espace. La machine frigorifique 24 est une machine frigorifique à alimentation électrique. Dans l'exemple de réalisation décrit, la machine frigorifique 24 comprend au moins un moteur électrique associé à un compresseur pour la génération de froid.

La machine frigorifique 24 est fixée ici sur la face avant 22 de la carrosserie à l'extérieur de l'espace de chargement. En variante, il est possible de monter la machine frigorifique 24 sur une des autres parois de la carrosserie 10, par exemple sur le pavillon 18 ou sur le plancher 20.

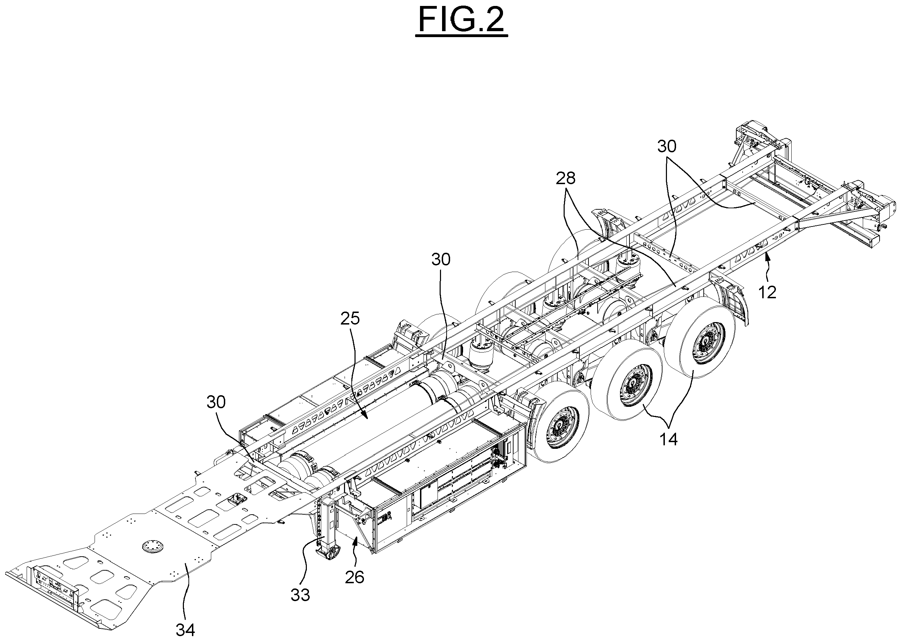

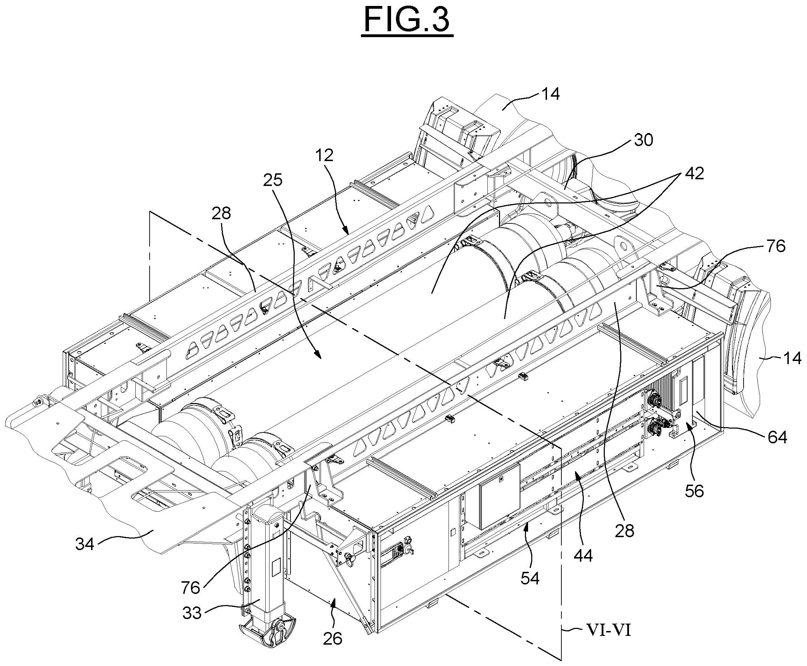

Comme cela sera décrit plus en détail par la suite et comme illustré plus visiblement aux figures 2 et 3, la semi-remorque comprend également un module 25 de production d'électricité pour alimenter en énergie électrique la machine frigorifique 24, et un coffre 26 de support permettant de suspendre et de fixer le module au châssis 12. Le module 25 est fixé sur le coffre 26.

Le châssis 12 comprend deux longerons 28 longitudinaux fixés sur le plancher de la carrosserie du côté opposé à l'espace de chargement. Les longerons 28 sont espacés dans le sens transversal. Les longerons 28 sont parallèles entre eux.

Le châssis 12 comprend également une pluralité de traverses 30 s'étendant transversalement entre les longerons 28 et espacées les unes par rapport aux autres dans le sens longitudinal. Les traverses 30 sont fixées aux longerons 28.

En se référant de nouveau à la figure 1, le châssis 12 comprend un train roulant pourvu d'essieux 32 pour le support des roues 14. Les essieux 32 sont ici au nombre de trois. Alternativement, il pourrait être possible de prévoir un nombre différent d'essieux.

Le châssis 12 est équipé encore de béquilles 33 fixées sur les longerons 28 pour permettre à la semi-remorque de reposer sur le sol à l'état dételé. Les béquilles 33 sont ici au nombre de deux et fixées chacune sur un des longerons 28. Le châssis 12 comprend également une plaque d'attelage 34 fixée aux longerons 28 pour assurer l'attelage ou le dételage à un tracteur. La plaque d'attelage 34 est également fixée au plancher de la carrosserie du côté opposé à l'espace de chargement intérieur.

La semi-remorque comprend également deux carénages 35 latéraux (un seul étant visible sur la figure) opposés qui s'étendent longitudinalement et qui sont disposés chacun en-dessous d'un des flancs 16 de la carrosserie dans la position illustrée sur cette figure. Les carénages 35 forment des carénages latéraux droit et gauche. Les deux carénages 35 sont identiques entre eux. Dans l'exemple de réalisation illustré, les carénages 35 latéraux présentent des formes aérodynamiques. En variante, il est possible de prévoir des carénages conçus sans considération aérodynamiques.

Chaque carénage 35 comprend une pluralité de panneaux 36, 37, 38 et 39 agencés successivement dans le sens longitudinal. Le panneau 36 est disposé dans la zone de la carrosserie où se trouvent les béquilles 33, qui est appelée zone "béquilles". Le panneau 37 est disposé dans une zone de la carrosserie dite "empattement" où se trouve le coffre 26. Le panneau 38 est disposé dans une zone dite "train roulant" et le panneau 39 est disposé dans une zone de la carrosserie dite "porte à faux". En variante, le nombre et/ou la disposition des panneaux de chaque carénage 35 peuvent être modifiés.

Chaque panneau 37 à 39 est mobile à rotation autour d'axes d'articulation horizontaux entre une position abaissée d'utilisation comme cela est illustré à la figure 1 et une position relevée. Dans la position abaissée d'utilisation, chaque panneau 37 à 39 prolonge en partie verticalement vers le bas le flanc 16 adjacent de la carrosserie, et est situé verticalement en-dessous dudit flanc. Dans la position relevée, les panneaux 37 à 39 permettent de pouvoir accéder sous le plancher 20 de la carrosserie.

Le panneau 36 est quant à lui mobile à rotation autour d'un axe d'articulation vertical entre une position fermée d'utilisation illustrée à la figure 1 et une position ouverte pour permettre l'accès aux béquilles 33 ou au module 25 de production d'électricité comme cela sera décrit par la suite.

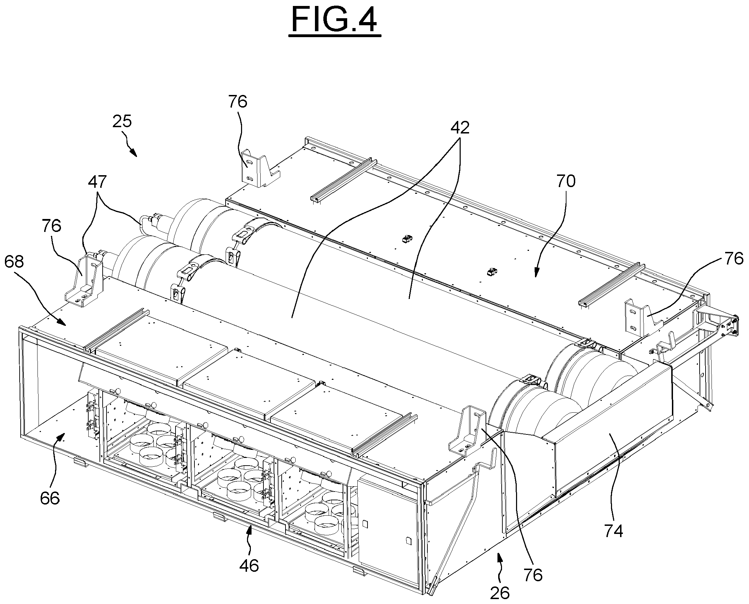

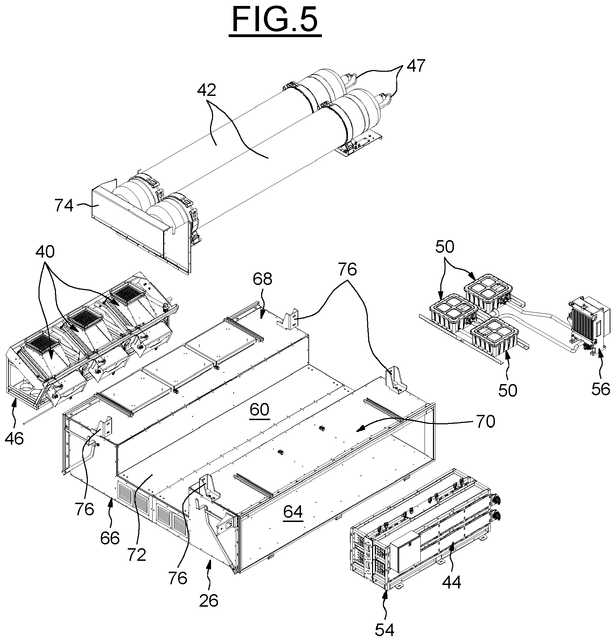

Comme illustré plus visiblement aux figures 4 et 5, le module 25 de production d'électricité comprend une pluralité de piles à combustible 40 à hydrogène, deux réservoirs 42 de stockage pour l'alimentation en hydrogène des piles à combustible, et des batteries 44 pour le stockage de l'énergie électrique produite par les piles à combustible.

Les piles à combustible 40 sont connectées en série. Chaque pile à combustible 40 permet la génération d'énergie électrique par une réaction électrochimique à partir d'hydrogène et d'oxygène. Chaque pile à combustible 40 est du type à membrane échangeuse de protons à électrolyte solide (PEMFC), et comprend un élément anodique et un élément cathodique séparés par un électrolyte solide sous la forme d'une membrane réalisée par exemple en matériau polymère perfluoré sulfuré. En variante, un autre type de pile à combustible pourrait être utilisé.

Chaque pile à combustible 40 est constituée d'un empilement de cellules élémentaires, chaque cellule constituant un générateur électrochimique. Les cellules sont branchées en série et leur alimentation en réactif, c'est-à-dire en hydrogène à l'anode et en oxygène à la cathode, se fait en parallèle.

Le module 25 de production d'électricité comprend également un bâti 46 formant un rack sur lequel sont fixées les piles à combustible 40. Dans l'exemple de réalisation illustré, les piles à combustible 40 sont au nombre de trois. Alternativement, il est possible de prévoir un nombre différent de piles à combustible.

Les réservoirs 42 permettent le stockage d'hydrogène en vue de l'alimentation en hydrogène des piles à combustible 40. Dans ce but, le module 25 de production d'électricité comprend des conduites d'alimentation (non représentées) reliant les réservoirs 42 aux piles à combustible 40.

L'hydrogène est stocké sous forme gazeuse comprimé à l'intérieur des réservoirs 42. Les réservoirs 42 de stockage sont identiques entre eux. Les réservoirs 42 sont disposés côte à côte en étant alignés l'un par rapport à l'autre dans le sens transversal. Chaque réservoir 42 s'étend longitudinalement.

Chaque pile à combustible 40 comprend encore des conduites d'entrée air (non représentées) pour leur alimentation avec l'oxygène contenu dans l'air et leur refroidissement. En variante, il pourrait être possible de prévoir d'autres moyens pour l'alimentation en oxygène de chaque pile à combustible 40, par exemple un réservoir embarqué pour le stockage d'oxygène pur sous forme comprimé. En variante, il pourrait également être possible de prévoir un refroidissement des piles à combustible 40 par circulation d'un liquide de refroidissement.

Les piles à combustible 40 permettent d'alimenter en énergie électrique la machine frigorifique 24 à alimentation électrique (figure 1), en l'espèce le moteur électrique de la machine dans cet exemple de réalisation. Cette alimentation en énergie électrique est réalisée par l'intermédiaire des batteries 44 qui stockent l'énergie électrique produite par les piles à combustible 40 pour la délivrer ensuite au moteur électrique de la machine frigorifique 24.

Les piles à combustible 40 génèrent un courant électrique continu qui est envoyé aux batteries 44 via des convertisseurs (non représentés) de type DC/DC du module de production d'électricité. A titre indicatif, chaque pile à combustible 40 fournit un voltage de 70 Volts, et le convertisseur DC/DC associé rehausse la tension par exemple à une valeur de 300 Volts qui est délivrée aux batteries 44. Le courant électrique continu issu des batteries 44 est envoyé, via des convertisseurs 50 de type DC/AC du module de production d'électricité, au moteur électrique de la machine frigorifique 24.

Les piles à combustible 40 sont couplées à une première ligne électrique (non représentée) du module 25 de production d'électricité sur laquelle sont branchées les batteries 44. Les batteries 44 sont reliées électriquement au moteur électrique de la machine frigorifique. A cet effet, une deuxième ligne électrique (non représentée) du module 25 de production d'électricité est prévue entre les batteries 44 et le moteur électrique de la machine frigorifique.

Les batteries 44 permettant le stockage de l'énergie électrique produite par les piles à combustible 40 peuvent par exemple être des batteries Lithium-Ion. A titre indicatif, la capacité des batteries peut par exemple être comprise entre 15 kWh et 30 kWh. Le module 25 de production d'électricité comprend encore un bâti 54 formant un rack sur lequel sont fixées les batteries 44.

Le module 25 de production d'électricité comprend également un échangeur de chaleur 56 pour le refroidissement des convertisseurs 50 du type DC/AC. L'échangeur de chaleur 56 peut par exemple être un condenseur. L'échangeur de chaleur 56 peut également être utilisé pour le refroidissement des piles à combustibles 40 et/ou des batteries 44.

En se référant de nouveau aux figures 2 et 3, le coffre 26 est fixé au châssis 12 longitudinalement entre les roues 14 et les béquilles 33 de celui-ci. Comme cela sera décrit plus en détail par la suite, le coffre 26 est fixé sur les longerons 28 du châssis 12. L'encombrement transversal du coffre 26 reste inscrit dans l'encombrement transversal du plancher de la carrosserie.

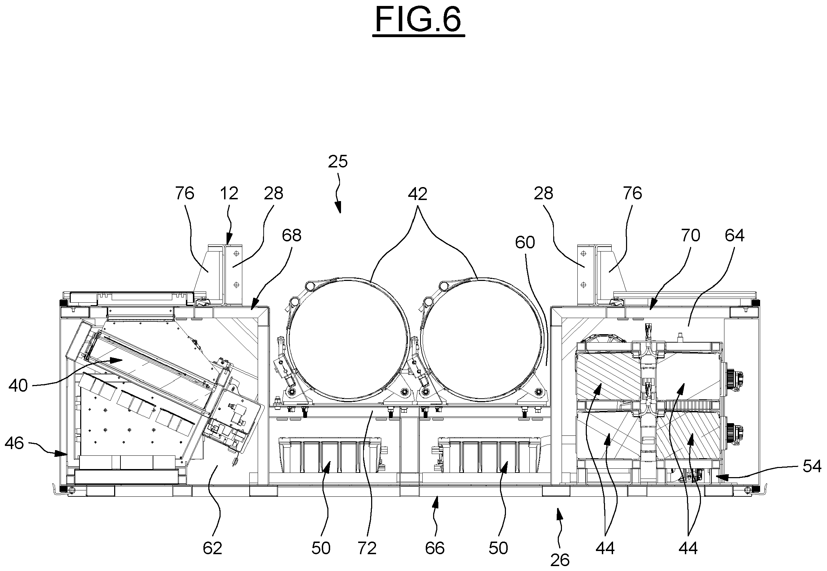

Comme illustré plus visiblement aux figures 5 et 6, le coffre 26 délimite un logement 60 central de réception des réservoirs 42 de stockage, et deux compartiments 62, 64 latéraux à l'intérieur desquels sont respectivement fixées les piles à combustible 40 et les batteries 44. L'échangeur de chaleur 56 est également fixé à l'intérieur du compartiment 64. Le logement 60 est ouvert ver le haut, i.e. en direction du plancher de la carrosserie.

Les réservoirs 42 s'étendent verticalement en partie à l'intérieur du logement 60 et en partie à l'extérieur dudit logement. Les réservoirs 42 s'étendent verticalement en saillie par rapport aux parois supérieures des caissons 68, 70. Une partie de chacun des réservoirs 42 est disposée verticalement entre les longerons 28 du châssis.

Les réservoirs 42 sont montés transversalement entre les longerons 28 du châssis en considérant un plan transversal audit châssis. Les réservoirs 42 s'étendent longitudinalement le long des longerons 28. Compte tenu de la disposition des réservoirs 42 relativement aux longerons 28 du châssis, les réservoirs sont protégés des chocs par les longerons.

Le coffre 26 comprend une paroi de fond 66 inférieure et deux caissons 68, 70 qui sont fixés sur la paroi de fond et qui délimitent intérieurement les compartiments 62, 64.

Les caissons 68, 70 du coffre s'étendent dans le sens longitudinal sur toute la paroi de fond 66. Chaque caisson 68, 70 est ouvert transversalement vers l'extérieur pour l'accès aux piles à combustible 40, aux batteries 44.

Chaque caisson 68, 70 est fermé dans le sens longitudinal et dans le sens vertical. Les caissons 68, 70 sont fermés verticalement vers le bas par la paroi de fond 56. Les piles à combustible 40 et les batteries 44 sont fixées sur la paroi de fond 66 du coffre. Plus précisément, les bâtis 46, 54 de support des piles à combustible 40 et des batteries 44 sont fixés sur la paroi de fond 66. L'échangeur de chaleur 56 est également fixé sur la paroi de fond 66.

Les caissons 68, 70 du coffre sont espacés dans le sens transversal. Les caissons 68, 70 délimitent dans le sens transversal le logement 60. Le fond du logement 60 est formé par une embase 72 de support qui s'étend transversalement entre les caissons 68, 70 et qui est espacée de la paroi de fond 66. Le coffre 26 est obtenu par assemblage de tôles d'épaisseur relativement mince.

Les réservoirs 42 sont fixés sur l'embase 72 de support du coffre. Des colliers de serrage (non référencés) sont prévus pour réaliser la fixation sur l'embase 72. Les convertisseurs 50 du type DC/AC sont fixés sur la paroi de fond 66 du coffre en-dessous de l'embase 72 de support.

Les réservoirs 42 s'étendent longitudinalement en saillie de part et d'autre du logement 60. Ainsi, l'extrémité avant de chaque réservoir 42 s'étend en saillie vers l'avant par rapport aux parois frontales avant des caissons 68, 70 et l'extrémité arrière de chaque réservoir 42 s'étend en saillie vers l'arrière par rapport aux parois frontales arrière des caissons 68, 70. Les parois frontales avant et arrière de chaque caisson 68, 70 délimitent dans le sens longitudinal chaque caisson. De sorte à protéger les extrémités avant des réservoirs 42, le coffre 26 est équipé d'un carénage 74 venant entourer ces extrémités avant. Le carénage 74 est fixé sur les parois frontales avant des caissons 68, 70. L'extrémité avant de chaque réservoir 42 comprend un orifice de remplissage (non visible) pour le remplissage en hydrogène. L'extrémité arrière de chaque réservoir 42 comprend un évent, réalisé sous la forme d'un tuyau 47, pour l'évacuation si nécessaire de l'hydrogène.

Comme indiqué précédemment, chaque caisson 68, 70 est ouvert transversalement vers l'extérieur pour l'accès aux piles à combustible 40, aux batteries 44. Dans la position abaissée d'utilisation du panneau 37 de chaque carénage 35 latéral (figure 1), ce panneau 37 permet de fermer le caisson 68, 70 associé. Le panneau 36 de chaque carénage 35 permet quant à lui dans sa position ouverte d'accéder aux orifices de remplissage des réservoirs 42.

Le coffre 26 est équipé de pattes 76 de fixation pour suspendre et fixer le coffre sur les longerons 28 du châssis sous le plancher de la carrosserie. Les pattes 76 sont prévues aux extrémités avant et arrière du coffre 26. Les pattes 76 sont fixées sur les parois supérieures des caissons 68, 70. Dans l'exemple de réalisation illustré, il est prévu deux pattes 76 par caisson 68, 70 et les pattes présentent une forme en équerre. Alternativement, il est possible de prévoir d'autres dispositions et/ou d'autres formes des pattes 76. Les pattes 76 du coffre sont fixées de façon amovible sur les longerons 28 du châssis, par exemple par boulonnage. Les pattes 76 du coffre sont montées en appui contre les longerons 28 du châssis transversalement du côté extérieur.

Grâce à l'invention, on dispose d'une semi-remorque ou remorque comprenant une carrosserie frigorifique pour laquelle les émissions de particules polluantes et la génération de bruit sont fortement réduites.

Ceci est rendu possible grâce à l'utilisation d'une machine frigorifique à alimentation électrique et l'intégration au châssis du coffre supportant le module de production d'électricité pour l'alimentation en énergie électrique de cette machine électrique.

Par ailleurs, dans la conception particulière dans laquelle le ou les réservoirs de stockage en hydrogène du module de production d'électricité sont situés transversalement entre les longerons du châssis, ces longerons procurent une protection supplémentaire pour le ou les réservoirs.

L'invention a été illustrée à titre d'exemple sur la base d'une semi-remorque. L'invention est aussi applicable à une remorque.

## Revendications

1. Semi-remorque remorque frigorifique de transport de marchandises comprenant :
- une carrosserie frigorifique (10) comprenant un espace de chargement intérieur et une machine frigorifique (24) pour contrôler la température à l'intérieur dudit espace de chargement,
- un châssis (12) comprenant au moins deux longerons (28) s'étendant longitudinalement et sur lesquels est montée la carrosserie frigorifique,
- un module (25) de production d'électricité pour alimenter en énergie électrique la machine frigorifique (24) à alimentation électrique, ledit module comprenant au moins une pile à combustible (40), au moins un réservoir (42) de stockage d'hydrogène pour l'alimentation en hydrogène de ladite pile à combustible, et au moins une batterie (44) pour le stockage de l'énergie électrique produite par ladite pile à combustible et pour l'alimentation de la machine frigorifique (24), et
- un coffre (26) sur lequel est fixé le module (25) de production d'électricité, le coffre étant fixé au châssis (12),
- ledit réservoir (42) de stockage du module de production d'électricité étant monté entre les longerons (28) du châssis en considérant un plan transversal audit châssis.

2. Semi-remorque ou remorque frigorifique selon la revendication 1, dans laquelle ledit réservoir (42) de stockage est situé au moins en partie entre les longerons (28) du châssis en considérant le sens vertical.

3. Semi-remorque ou remorque frigorifique selon la revendication 1 ou 2, dans laquelle ledit réservoir (42) de stockage du module de production d'électricité s'étend longitudinalement le long des longerons (28) du châssis.

4. Semi-remorque ou remorque frigorifique selon l'une quelconque des revendications précédentes, dans laquelle le coffre (26) est fixé sur les longerons.

5. Semi-remorque ou remorque frigorifique selon l'une quelconque des revendications précédentes, dans laquelle le coffre (26) délimite un logement (60) central à l'intérieur duquel est disposé ledit réservoir (42) de stockage.

6. Semi-remorque ou remorque frigorifique selon la revendication 5, dans laquelle le logement (60) du coffre est ouvert en direction du plancher de la carrosserie frigorifique (10).

7. Semi-remorque ou remorque frigorifique selon la revendication 5 ou 6, dans laquelle ledit réservoir (42) de stockage du module de production d'électricité s'étend longitudinalement en saillie de part et d'autre du logement (60) du coffre.

8. Semi-remorque ou remorque frigorifique selon l'une quelconque des revendications 5 à 7, dans laquelle le coffre (26) délimite en outre deux compartiments (62, 64) latéraux respectivement pour le montage de ladite pile à combustible (40) et de ladite batterie (44) qui sont disposés transversalement de part et d'autre du logement (60) central.

9. Semi-remorque ou remorque frigorifique selon la revendication 8, dans laquelle les compartiments (62, 64) du coffre sont ouverts transversalement vers l'extérieur.

10. Semi-remorque ou remorque frigorifique selon la revendication 9, comprenant en outre deux carénages latéraux (35) comprenant chacun au moins un panneau (37) de fermeture mobile à rotation entre une position abaissée d'utilisation et une position relevée, chacun desdits panneaux (37) permettant de fermer le compartiment (62, 64) associé du coffre dans la position abaissée d'utilisation.

11. Semi-remorque ou remorque frigorifique selon l'une quelconque des revendications précédentes, dans laquelle le coffre (26) est fixé au châssis longitudinalement entre des roues (14) et des béquilles (33) de support dudit châssis.

12. Semi-remorque ou remorque frigorifique selon la revendication 11, comprenant au moins un panneau (36) d'accès mobile à rotation autour d'un axe d'articulation dans la zone des béquilles (33) de support et permettant l'accès à un orifice de remplissage dudit réservoir (42) de stockage du module de production d'électricité

13. Semi-remorque ou remorque frigorifique selon la revendication 12 dépendante de la revendication 10, dans laquelle ledit panneau (36) forme une partie d'un des carénages latéraux (35).

14. Semi-remorque ou remorque frigorifique selon l'une quelconque des revendications précédentes, dans laquelle ledit réservoir (42) de stockage du module de production d'électricité comprend au moins un évent d'évacuation disposé à l'arrière dudit réservoir.

15. Semi-remorque ou remorque frigorifique selon l'une quelconque des revendications précédentes, dans laquelle le coffre (26) est équipé de pattes de fixation (76) fixées sur le châssis (12) pour suspendre le coffre audit châssis.

## Patentansprüche

1. Sattelauflieger-Kühlanhänger für den Warentransport, umfassend:
- einen Kühlaufbau (10), der einen inneren Laderaum und eine Kältemaschine (24) zum Kontrollieren der Temperatur im Inneren des Laderaums umfasst,
- ein Untergestell (12), das mindestens zwei Längsträger (28) umfasst, die sich in Längsrichtung erstrecken, und auf denen der Kühlaufbau montiert ist,
- ein Modul (25) zur Stromerzeugung, um die elektrisch versorgte Kältemaschine (24) mit elektrischer Energie zu versorgen, wobei das Modul mindestens eine Brennstoffzelle (40), mindestens einen Speichertank (42) für Wasserstoff zur Versorgung der Brennstoffzelle mit Wasserstoff, und mindestens eine Batterie (44) zum Speichern der durch die Brennstoffzelle erzeugten elektrischen Energie und zum Versorgen der Kältemaschine (24) umfasst, und
- einen Kasten (26), auf dem das Modul (25) zur Stromerzeugung befestigt ist, wobei der Kasten am Untergestell (12) befestigt ist,
- wobei der Speichertank (42) des Moduls zur Stromerzeugung unter Annahme einer Ebene quer zum Untergestell zwischen den Längsträgern (28) des Untergestells montiert ist.

2. Sattelauflieger oder Kühlanhänger nach Anspruch 1, wobei sich der Speichertank (42) unter Annahme der vertikalen Richtung mindestens teilweise zwischen den Längsträgern (28) des Untergestells befindet.

3. Sattelauflieger oder Kühlanhänger nach Anspruch 1 oder 2, wobei sich der Speichertank (42) des Moduls zur Stromerzeugung in Längsrichtung entlang der Längsträger (28) des Untergestells erstreckt.

4. Sattelauflieger oder Kühlanhänger nach einem der vorstehenden Ansprüche, wobei der Kasten (26) an den Längsträgern befestigt ist.

5. Sattelauflieger oder Kühlanhänger nach einem der vorstehenden Ansprüche, wobei der Kasten (26) eine zentrale Aufnahme (60) begrenzt, in deren Inneren der Speichertank (42) angeordnet ist.

6. Sattelauflieger oder Kühlanhänger nach Anspruch 5, wobei die Aufnahme (60) des Kastens in Richtung der Bodenplatte des Kühlaufbaus (10) offen ist.

7. Sattelauflieger oder Kühlanhänger nach Anspruch 5 oder 6, wobei sich der Speichertank (42) des Moduls zur Stromerzeugung in Längsrichtung beiderseits der Aufnahme (60) des Kastens hervorstehend erstreckt.

8. Sattelauflieger oder Kühlanhänger nach einem der Ansprüche 5 bis 7, wobei der Kasten (26) weiter zwei seitliche Fächer (62, 64) jeweils zur Montage der Brennstoffzelle (40) und der Batterie (44) begrenzt, die in Querrichtung, beiderseits der zentralen Aufnahme (60) angeordnet sind.

9. Sattelauflieger oder Kühlanhänger nach Anspruch 8, wobei die Fächer (62, 64) des Kastens in Querrichtung nach außen hin offen sind.

10. Sattelauflieger oder Kühlanhänger nach Anspruch 9, weiter zwei seitliche Verkleidungen (35) umfassend, die jeweils mindestens eine zwischen einer abgesenkten Nutzungsposition und einer angehobenen Position drehbewegliche Verschlussplatte (37) umfassen, wobei jede der Platten (37) es ermöglicht, das dem Kasten zugeordnete Fach (62, 64) in der abgesenkten Nutzungsposition zu schließen.

11. Sattelauflieger oder Kühlanhänger nach einem der vorstehenden Ansprüche, wobei der Kasten (26) in Längsrichtung zwischen den Rädern (14) und den Stützbeinen (33) des Untergestells am Untergestell befestigt ist.

12. Sattelauflieger oder Kühlanhänger nach Anspruch 11, mindestens eine Zugangsplatte (36) umfassend, die um eine Gelenksachse im Bereich der Stützbeine (33) drehbeweglich ist, und den Zugang zu einer Öffnung zum Füllen des Speichertanks (42) des Moduls zur Stromerzeugung ermöglicht.

13. Sattelauflieger oder Kühlanhänger nach Anspruch 12, von Anspruch 10 abhängig, wobei die Platte (36) einen Teil einer der seitlichen Verkleidungen (35) bildet.

14. Sattelauflieger oder Kühlanhänger nach einem der vorstehenden Ansprüche, wobei der Speichertank (42) des Moduls zur Stromerzeugung mindestens eine Austragsentlüftung umfasst, die an der Rückseite des Tanks angeordnet ist.

15. Sattelauflieger oder Kühlanhänger nach einem der vorstehenden Ansprüche, wobei der Kasten (26) mit Befestigungslaschen (76) ausgestattet ist, die am Untergestell (12) befestigt sind, um den Kasten am Untergestell aufzuhängen.

## Claims

1. Refrigerated semi-trailer for transporting goods comprising:
- a refrigerated body (10) comprising an internal loading area and a refrigeration device (24) for controlling the temperature inside said loading area,
- a chassis (12) comprising at least two longerons (28) extending longitudinally and whereon the refrigerated body is mounted,
- an electricity producing module (25) for supplying the electrical power supply refrigeration device (24) with electricity, said module comprising at least one fuel cell (40), at least one hydrogen storage tank (42) for the hydrogen supply of said fuel cell, and at least one battery (44) for storing the electricity produced by said fuel cell and for supplying the refrigeration device (24), and
- a trunk (26) whereon the electricity producing module (25) is attached, the trunk being attached to the chassis (12),
- said storage tank (42) of the electricity producing module being mounted between the longerons (28) of the chassis relative to a transverse plan to the chassis.

2. Refrigerated semi-trailer or trailer according to claim 1, wherein said storage tank (42) is located at least partially between the longerons (28) of the chassis relative to the vertical direction.

3. Refrigerated semi-trailer or trailer according to claim 1 or 2, wherein said storage tank (42) of the electricity producing module extends longitudinally along the longerons (28) of the chassis.

4. Refrigerated semi-trailer or trailer according to any one of the preceding claims, wherein the trunk (26) is attached to the side rails.

5. Refrigerated semi-trailer or trailer according to any one of the preceding claims, wherein the trunk (26) delimits a central housing (60) inside which said storage tank (42) is disposed.

6. Refrigerated semi-trailer or trailer according to claim 5, wherein the housing (60) of the trunk is open in the direction of the floor of the refrigerated body (10).

7. Refrigerated semi-trailer or trailer according to claim 5 or 6, wherein said storage tank (42) of the electricity producing module extends longitudinally projecting on either side of the housing (60) of the trunk.

8. Refrigerated semi-trailer or trailer according to any one of claims 5 to 7, wherein the trunk (26) furthermore delimits two side compartments (62, 64) respectively for mounting said fuel cell (40) and said battery (44) which are disposed transversely on either side of the central housing (60).

9. Refrigerated semi-trailer or trailer according to claim 8, wherein the compartments (62, 64) of the trunk are open transversely outwards.

10. Refrigerated semi-trailer or trailer according to claim 9, further comprising two side fairings (35) each comprising at least one closing panel (37) rotatable between a lowered use position and a raised position, each of said panels (37) making it possible to close the compartment (62, 64) associated with the trunk in the lowered use position.

11. Refrigerated semi-trailer or trailer according to any one of the preceding claims, wherein the trunk (26) is attached to the chassis longitudinally between wheels (14) and support landing gears (33) of said chassis.

12. Refrigerated semi-trailer or trailer according to claim 11, comprising at least one access panel (36) rotatable about a hinge axis in the area of the support landing gears (33) and allowing access to a filling port of said storage tank (42) of the electricity producing module.

13. Refrigerated semi-trailer or trailer according to claim 12 dependent on claim 10, wherein said panel (36) forms a part of one of said side fairings (35).

14. Refrigerated semi-trailer or trailer according to any one of the preceding claims, wherein said storage tank (42) of the electricity producing module comprises at least one discharge vent disposed to the rear of said tank.

15. Refrigerated semi-trailer or trailer according to any one of the preceding claims, wherein the trunk (26) is equipped with attachment lugs (76) attached to the chassis (12) to suspend the trunk from said chassis.
